# EUROPEAN PATENT APPLICATION

(11) **EP 2 129 050 A1**
(43) Date of publication of application: **02.12.2009**
(21) Application number: 07801109.5
(22) Date of filing: 18.09.2007
(51) Int. Cl.: H04L 12/46, H04L 29/06

(54) **TUNNEL ESTABLISHING METHOD, NETWORK NODE DEVICE AND NETWORK SYSTEM**

(30) Priority: 12.02.2007 CN 200710026881
(71) Applicant: Huawei Technologies Co., Ltd., Longgang District, Shenzhen Guangdong Province 518129 (CN)
(72) Inventor: XIONG, Yi, Shenzhen Guangdong Province 518129 (CN)
(74) Representative: Pfenning, Meinig & Partner GbR
(86) International application number: PCT/CN2007/070713
(87) International publication number: WO 2008/098451

(57) **Abstract**

A network node device, a network system and a tunnel establishing method are disclosed. The method is that, when establishing Multi-Protocol Label Switching tunnels, the network node device providing aggregate links, through which Multi-Protocol Label Switching tunnels pass, determines physical bandwidth resources for establishing Multi-Protocol Label Switching tunnels. Since Multi-Protocol Label Switching Traffic Engineering tunnels are directly bundled to physical ports and Link Aggregation is taken as a manner for improving bandwidth, the forward plane each Multi-Protocol Label Switching Traffic Engineering tunnel may obtain the bandwidth allocated by the control plane, and simultaneously, the bandwidth of the Link Aggregation is fully utilized, so as to carry Multi-Protocol Label Switching Traffic Engineering traffic as much as possible, thereby achieving the goal of improving link bandwidth with the Link Aggregation technology.

## Description

### FIELD OF THE INVENTION

The present invention relates to a communication filed, and in particular to a network data transmission technique, and more specifically to a tunnel establishing method, a network node device and a network system.

### BACKGROUND

According to a definition of Internet Traffic Engineering Working group by Internet Engineering Task Force (IETF), Internet Traffic Engineering (TE) focuses on performance optimization of operational networks. Internet Traffic Engineering applies scientific and technology principles to the measurement, modeling, characterization, and control of Internet traffic based on business goals, and achieves, with such knowledge and technology, specific performance goals including allowing prompt and reliable traffic transmission over a network, improving utilization efficiency of network resources and making a proper planning for network capacity. Multi-Protocol Label Switching Traffic Engineering (MPLS TE) is one of technique approaches for achieving the goals aforementioned, and is currently capable of mainly providing functions as follows:
1. providing capacity of forwarding IP packets via a shortest path of none-IGP (Interior Gateway Protocols), to facilitate traffic with a better bypass to avoid congested points in a network;
2. providing the traffic with bandwidth guarantee so that the traffic transmitted in terms of an MPLS TE technology would not be dropped due to inadequate link bandwidth; and
3. providing a guarantee of stable and reliable transmission for the traffic so that when failure occurs on links or at transmission nodes, impacts on the traffic which is guaranteed by the MPLS TE technology would be as less as possible and are invisible to upper layer services.

In an environment of a high speed development of network nowadays, extension of services and increase of users bring more and more pressure to network bandwidth. Even the evolution of high speed physical link has also encountered technical barriers, which may hardly satisfy the continuously increasing requirements for bandwidth. Therefore, operators usually adopt a Link Aggregation technology to bundle a plurality of physical links together so as to form a single logical link for usage, which might improve reliability and network bandwidth at the same time, without depending simply on the increase of physical link bandwidth.

Link Aggregation is a technology that bundles a plurality of physical links together to form one logical link, wherein the physical links may be distributed on multiple interface boards. When MPLS TE tunnels are traversing the aggregate links, traffic carried on the MPLS TE is usually loaded on an actual physical link which is selected in hash manner. With different services carried on MPLS TE and different effects of hash, some traffic on MPLS TE is dispersed on different physical links while some links on MPLS TE are aggregated to one physical link. Consequently, it cannot be guaranteed that each physical link has an even share of traffic carried on MPLS TE. As a result, one physical link may carry traffic of multiple MPLS TEs. In the case that the hash traffic on several MPLS TE tunnels concentrates to one physical link and the sum of the traffic on these MPLS TE tunnels exceeds the bandwidth of the physical link, however, a forward plane cannot guarantee that each MPLS TE tunnel has its bandwidth allocated by a control plane. Moreover, the control plane cannot detect such problem. Finally this results in the drop of packets, decline of Quality of Service (QoS), even interruption of service. Although it may ensure that MPLS TE tunnels obtain the allocated bandwidth in the worst situation when adopting a policy of allocating a total bandwidth for MPLS TE tunnels which is a minimal bandwidth of a physical link in the aggregate links, however, the drawback lies in that it absolutely breaches the original intention of Link Aggregation and fails to increase the link bandwidth with the Link Aggregation technology.

### SUMMARY

A network node device, a network system and a tunnel establishing method are provided according to the present invention. When MPLS TE tunnels are traversing aggregate links, each MPLS TE tunnel is guaranteed to obtain in the forward plane the bandwidth allocated by the control plane, and simultaneously the bandwidth of the Link Aggregation is fully utilized, so as to carry MPLS TE traffic as much as possible.

A tunnel establishing method is provided according to the present invention, which includes:
receiving, by an intermediate network node providing aggregate links, a request for establishing MPLS TE tunnels initiated from a source network node device to a destination network node device, reserving node resources, and forwarding the request for establishing the tunnels to the destination network node;
responding, by the destination network node, to the request for establishing the tunnels, allocating the resources of the destination network node, determining physical bandwidth resources for establishing the MPLS TE tunnels, feeding back a resource reservation response message in a reverse direction along a tunnel path; and
determining, upon receipt of the resource reservation response message, by the intermediate network node providing aggregate links, the physical bandwidth resources for establishing the MPLS TE tunnels based on bandwidths of physical members in aggregate links, and feeding back the resource reservation response message to the source network node.

A network node device is provided according to the present invention, which includes:
a transmitting unit, configured to initiate a request to a destination network node for establishing MPLS TE tunnels, and to forward the request for establishing MPLS TE tunnels to the destination network node;
a receiving unit, configured to receive a resource reservation response message returned by the destination network node; and
a resource reservation processing unit, configured to reserve node resources and to determine physical bandwidth resources for establishing MPLS TE tunnels based on bandwidths of physical members in aggregate links on the network node device.

A network system is provided according to the present invention, which includes a source network node device and a destination network node on MPLS TE tunnels, and intermediate network node devices through which the MPLS TE tunnels pass, wherein the intermediate network node devices through which the MPLS TE tunnels pass include a network node device providing aggregate links, wherein the network node device providing aggregate links includes:
a transmitting unit, configured to initiate a request to a destination network node for establishing MPLS TE tunnels, and to forward the request for establishing MPLS TE tunnels to the destination network node;
a receiving unit, configured to receive a resource reservation response message returned by the destination network node; and
a resource reservation processing unit, configured to reserve node resources and to determine physical bandwidth resources for establishing MPLS TE tunnels based on bandwidths of physical members in aggregate links on the network node device.

According to the technical solutions provided by the embodiments of the present invention, when establishing MPLS tunnels, the network node device providing aggregate links through which MPLS tunnels pass, determines physical bandwidth resources for establishing Multi-Protocol Label Switching tunnels. Since MPLS TE tunnels are directly bundled to physical ports and Link Aggregation is taken as a manner for improving bandwidth, the bandwidth of the Link Aggregation is fully utilized, so as to carry MPLS TE traffic as much as possible, provided that in the forward plane each MPLS TE tunnel may obtain the bandwidth allocated by the control plane, thereby achieving the goal of improving link bandwidth with the Link Aggregation technology.

### BRIEF DESCRIPTION OF THE DRAWINGS

Figure 1 is a structural schematic of a network node device according to a n embodiment of the present invention;

Figure 2 is a structural schematic of a network system according to another embodiment of the present invention; and

Figure 3 is a networking schematic illustrating typical traverse of MPLS TE tunnels through link aggregation according to an embodiment of the present invention.

### DETAILED DESCRIPTION

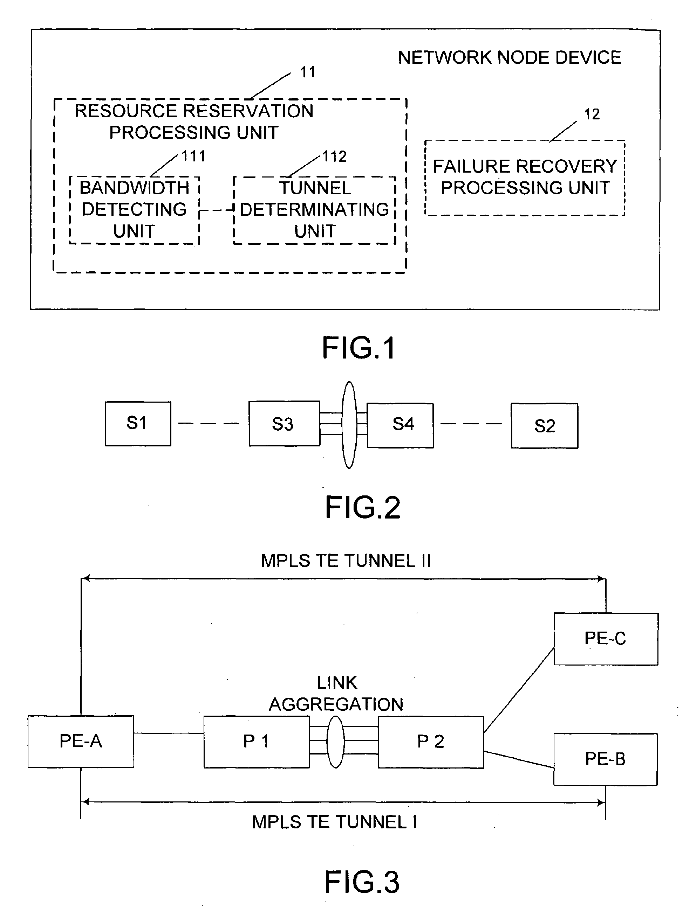

Referring to Figure 1, Figure 1 illustrates a structural schematic of a network node device according to a specific embodiment of the present invention.

In the present embodiment, an internal processing unit related to the network node device primarily includes a resource reservation processing unit 11 and a failure recovery processing unit 12.

The resource reservation processing unit 11

The resource reservation processing unit 11 is primarily configured to determine physical bandwidth resources for establishing MPLS TE tunnels based on bandwidths of physical members in aggregate links on the network node device. Referring to Figure 1 again, according to a specific embodiment, the resource reservation processing unit 11 may include following units:
a bandwidth detecting unit 111, configured to detect bandwidth of each physical member in aggregate links in the network node device according to the present embodiment; and
a selecting unit 112, mainly configured to select and determine a physical member in the aggregate links based on a detecting result from the bandwidth detecting unit in order to establish MPLS TE tunnels according to the present embodiment. In practice, the selecting unit 112 may either select a physical member with maximum available bandwidth, or select a physical member with bandwidth closest to a required bandwidth, in order to establish MPLS TE tunnels, or perform in some other ways that are omitted herein.

Additionally, in practice, an MPLS TE FRR (Fast Re-Routing) technology may be adopted to provide fast re-routing for MPLS TE tunnels in order to enhance reliability of MPLS TE tunnels; and meanwhile, Link Aggregation may also provide solutions to improve network reliability by way of backup for one another among physical members. However, there is a conflict between the two technologies when MPLS TE tunnels are traversing the aggregate links. In the aforementioned embodiment of the present invention, the TE tunnels are directly bundled to the physical port. At this point, Link Aggregation is taken as a manner for increasing bandwidth, so that backup among physical members will face the problem of traffic overload during failure convergence which results in the drop of packets, decline of QoS or even interruption occurring on the carried services. Therefore, when a link/node failure occurs on a physical member in the link aggregation, it is preferable to adopt the MPLS TE FRR technology to re-route for the carried traffic. When the user chooses a 1:1 or N: Link Aggregation technology, redundant resources are prepared by the user for improving network reliability. In this case, it is preferable to adopt the technology of backup among physical links in the link aggregation to switch the traffic carried on the failure physical port to a redundant port so as to reduce impacts upon services due to the network failure as much as possible.

Consequently, the network node device according to the embodiments of the present invention further includes: the failure recovery processing unit 12.

The failure recovery processing unit 12 is mainly configured to perform failure recovery based on MPLS TE FRR, or to perform failure recovery based on the backup among physical links in the link aggregation when an N:1 (N=1, 2, 3...) Link Aggregation is selected by the aggregate links.

Referring to Figure 2, Figure 2 illustrates a structural schematic of a network system according to an embodiment of the present invention.

In the embodiment, the network system primarily includes: a source network node device S1 and a destination network node S2 on MPLS TE tunnels, and intermediate network node devices through which the MPLS TE tunnels pass, wherein the intermediate network node devices through which the MPLS TE tunnels pass include a network node device S3 for providing aggregate links and a network node device S4 on anther port of the aggregate links. The network node device S3 for providing aggregate links has a specific structure, as shown in Figure 1, which primarily includes: a resource reservation processing unit and a failure recovery processing unit, wherein the functions and actual practice thereof are available by referring to the above descriptions, and thus the description thereof are omitted herein.

Procedures of establishing tunnels in a network system as shown in Figure 2 will be described below.

In the embodiment, a tunnel path direction is from the source network node device to the destination network node device, while a reverse direction over tunnel path is from the destination network node to the source network node device. Procedures for establishing tunnels are specified as follows.

First, the source network node device S1 on the tunnels initiates a request for establishing MPLS TE tunnels to the destination network node S2 via the intermediate network devices in the tunnel path direction. For example, the source network node device on the tunnels initiates a request message for establishing a tunnel path to the downstream network node device in the tunnel path direction.

Then, the downstream network node device transmits the request message for establishing a tunnel path in the tunnel path direction to a next downstream network node device until the message of establishing a tunnel path is transmitted to the destination network node S2.

Upon receipt of the request for establishing tunnels (such as upon receipt of the request message for establishing a tunnel path), the destination network node S2 performs corresponding reservation and distribution of local resources, and determines the physical bandwidth resources for establishing the MPLS TE tunnels, and then feeds back a resource reservation response message in the reverse direction along the tunnel path to upstream network node device.

Similarly, upon receipt of the resource reservation response message, the intermediate network node devices on the tunnel path perform corresponding reservation and distribution of local resources, and confirm the physical bandwidth resources for establishing the MPLS TE tunnel, and then return a resource reservation response message in the reverse direction along the tunnel path to an upper network node device until the resource reservation response message is transmitted to the source network node device. As a result, the establishment for tunnels is done.

Here, in the network node device S3 for providing aggregate links through which the tunnels pass, the physical bandwidth resources for establishing MPLS TE tunnels may be determined according to the bandwidths of physical members in the aggregate links, and the resource reservation response message is returned to the source network node device S1 on the tunnel. In the process of determining the physical bandwidth resources for establishing MPLS TE tunnels, it may detect the bandwidth of each physical member in the aggregate links, and then select and determine one physical member according to a detection result for establishing MPLS TE tunnels. For example, either a physical member with maximum available bandwidth or select a physical member with bandwidth closest to a required bandwidth may be selected for establishing MPLS TE tunnels, which are omitted herein.

Detailed descriptions will be provided below in a specific networking environment.

Referring to Figure 3, Figure 3 is a networking schematic illustrating a typical traverse of MPLS TE tunnels through link aggregation according to an embodiment of the present invention.

In the present embodiment, the network includes backbone routers P1, P2, edge routers PE-A, PE-B and PE-C, wherein P1 and P2 are link aggregated via three physical links. In the embodiment, an MPLS TE tunnel I will be established over a path of PE-A-P1-P2-PE-C; and an MPLS TE tunnel II will be established over a path of PE-A-P1-P2-PE-B. When establishing MPLS TE tunnels, a resource reservation unit in P1 needs to reserve bandwidth on logical interfaces of the Link Aggregation for the MPLS TE tunnel I and tunnel II.

Furthermore, in the present embodiment, the resource reservation unit in P1 may detect that the interface carrying the MPLS TE tunnels is a logical interface of the Link Aggregation, and may know the number of physical ports and bandwidth of each physical port.

When the resource reservation unit reserves resources for establishing the MPLS TE tunnel I, it may involve a maximum available bandwidth of Link Aggregation members in restricting routing calculation. The resource reservation unit may spread the information over the network via signaling, select a path for establishing the MPLS TE tunnel, and refresh available bandwidth of new members in the Link Aggregation. Since the resource reservation unit may detect the Link Aggregation, in the present embodiment, the resource reservation unit may directly point to physical member in the aggregate links as bearer interface for the TE tunnel. In this way, with the physical member as allocation unit for the TE bandwidth, it may be ensured that in a forward plane, the TE tunnel definitely has the bandwidth allocated by a control plane, and it may not occur that some physical members are in idle while others are overloaded due to uneven hash.

Moreover, various policies may be adopted to select physical ports. For example, a physical member with maximum available bandwidth may be selected every time, or a physical member with bandwidth closest to a required bandwidth may be selected to carry a newly established TE tunnel, and the descriptions of which are omitted herein.

Additionally, in the present embodiment, when the resource reservation unit reserves resources for establishing the MPLS TE tunnel II, it may again involve the maximum available bandwidth of current Link Aggregation members in restricting routing calculation. The resource reservation unit may spread the information over the network via signaling, and select a physical member participating in the Link Aggregation to carry the MPLS TE tunnel. Here, it may be supposed that each physical member participating in the Link Aggregation has a 1G bandwidth and the MPLS TE tunnel I has a reserved bandwidth of 600M. At this point, the maximum available bandwidth of the physical members in the aggregate links is still 1G, which may still afford the establishment of TE tunnel with a bandwidth of 1G. In a desirable situation, bandwidths of all the physical members in the Link Aggregation may be reserved for carrying TE tunnels with different resource requirements in order to meet the requirement for increasing link bandwidth via Link Aggregation by operators.

In the network node device providing the aggregate links, the resource reservation processing unit (which may include the bandwidth detecting unit and the selecting unit) and the failure recovery processing unit may be implemented as software in a specific apparatus. In other words, the corresponding software for implementing various units and processing procedures aforementioned may be stored in a computer readable storage medium.

It can be understood by those skilled in the art that all or part of the various units or the various procedures may be implemented by programs for instructing related hardware, wherein the programs may be stored in a computer readable storage medium such as ROM/RAM, magnetic disk, compact disk, etc. Or, they may be manufactured to be various integrated circuit modules respectively, or some of the units or the procedures may be manufactured to be a single integrated circuit module. Therefore, the present invention is not limited to any specific combination of hardware and software.

In summary, according to the embodiments of the present invention, when establishing the MPLS tunnels, the network node device providing the aggregate links between devices through which the MPLS tunnels pass determines physical bandwidth resources for establishing MPLS tunnels based on bandwidths of physical members in the aggregate links. Since MPLS TE tunnels are directly bundled to physical ports and Link Aggregation is taken as a manner for improving bandwidth, the bandwidth of the Link Aggregation is fully utilized so as to carry MPLS TE traffic as much as possible, provided that in the forward plane each MPLS TE tunnel may obtain the bandwidth allocated by the control plane, thereby achieving the goal of improving link bandwidth with the Link Aggregation technology.

In addition, when link/node failure occurs on a physical member in the link aggregation, it is preferable to adopt the MPLS TE FRR technology to re-route for the carried traffic. When a user adopts a 1:1 or N:1 Link Aggregation technology, redundant resources are prepared by the user for improving network reliability. In this case, it is preferable to adopt the technology of backup among physical links in the link aggregation to switch the traffic carried on the failure physical port to a redundant port so as to reduce impacts upon services due to the network failure as much as possible.

The foregoing embodiments are merely preferred embodiments of the present invention. It should be noted that several modifications and variations can be made by those skilled in the art without departing from the principle of the present invention. These modifications and variations shall be construed as fall within the scope of the present invention.

## Claims

1. A tunnel establishing method, **characterized by** comprising:
receiving, by an intermediate network node providing aggregate links, a request for establishing MPLS TE tunnels initiated from a source network node device to a destination network node device, reserving node resources, and forwarding the request for establishing the tunnels to the destination network node;
responding, by the destination network node, to the request for establishing the tunnels, allocating resources of the destination network node, determining physical bandwidth resources for establishing the MPLS TE tunnels, feeding back a resource reservation response message in a reverse direction along a tunnel path; and
determining, upon receipt of the resource reservation response message, by the intermediate network node providing aggregate links, the physical bandwidth resources for establishing the MPLS TE tunnels based on bandwidths of physical members in aggregate links, and feeding back the resource reservation response message to the source network node.

2. The tunnel establishing method of claim 1, **characterized in that,** the step of determining the physical bandwidth resources for establishing the MPLS TE tunnels based on bandwidths of physical members in aggregate links comprises:
detecting bandwidth of each physical member in the aggregate links; and
selecting and determining one of the physical members in the aggregate links based on a detecting result to establish the MPLS TE tunnels.

3. The tunnel establishing method of claim 1, **characterized in that,** the selected and determined physical member is a physical member with a maximum available bandwidth.

4. The tunnel establishing method of claim 1, **characterized in that,** the selected and determined physical member is a physical member with a bandwidth closest to a required bandwidth.

5. A network node device, **characterized by** comprising:
a transmitting unit, configured to initiate a request to a destination network node for establishing MPLS TE tunnels, and to forward the request for establishing MPLS TE tunnels to the destination network node;
a receiving unit, configured to receive a resource reservation response message returned by the destination network node; and
a resource reservation processing unit, configured to reserve node resources and to determine physical bandwidth resources for establishing MPLS TE tunnels based on bandwidths of physical members in aggregate links on the network node.

6. The network node device of claim 5, **characterized in that,** the resource reservation processing unit comprises:
a bandwidth detecting unit, configured to detect bandwidth of each physical member in the aggregate links on the network node device; and
a selecting unit, configured to select and determine one physical member in the aggregate links based on a detecting result from the bandwidth detecting unit in order to establish the MPLS TE tunnels.

7. The network node device of claim 6, **characterized in that,** the selected and determined physical member is a physical member with a maximum available bandwidth.

8. The network node device of claim 6, **characterized in that,** the selected and determined physical member is a physical member with a bandwidth closest to a required bandwidth.

9. The network node device of any one of claims 5 to 8, **characterized by** further comprising:
a failure recovery processing unit, configured to perform failure recovery based on MPLS TE FRR, or to perform failure recovery based on backup among physical links in the link aggregation when an N:1 Link Aggregation is selected by the aggregate links, wherein N is positive integer.

10. A network system, comprising a source network node device and a destination network node on MPLS TE tunnels, and intermediate network node devices through which the MPLS TE tunnels pass, wherein the intermediate network node devices through which the MPLS TE tunnels pass comprise a network node device providing aggregate links, **characterized in that** the network node device providing aggregate links comprises:
a transmitting unit, configured to initiate a request to a destination network node device for establishing MPLS TE tunnels, and to forward the request for establishing MPLS TE tunnels to the destination network node;
a receiving unit, configured to receive a resource reservation response message returned by the destination network node; and
a resource reservation processing unit, configured to reserve node resources and to determine physical bandwidth resources for establishing MPLS TE tunnels based on bandwidths of physical members in aggregate links on the network node.

11. The network system of claim 10, **characterized in that,** the resource reservation processing unit comprises:
a bandwidth detecting unit, configured to detect bandwidth of each physical member in the aggregate links on the network node device; and
a selecting unit, configured to select and determine a physical member in the aggregate links based on a detecting result from the bandwidth detecting unit to establish the MPLS TE tunnels.

12. The network system of claim 11, **characterized in that,** the selecting unit selects a physical member with a maximum available bandwidth to establish the MPLS TE tunnels based on a detecting result from the bandwidth detecting unit.

13. The network system of claim 11, **characterized in that,** the selecting unit selects a physical member with a bandwidth closest to a required bandwidth to establish the MPLS TE tunnels based on a detecting result from the bandwidth detecting unit.

14. The network system of any one of claims 10 to 13, **characterized in that,** the network node device providing the aggregate links further comprises:
a failure recovery processing unit, configured to perform failure recovery based on MPLS TE FRR, or to perform failure recovery based on backup among physical links in the link aggregation when an N: Link Aggregation is selected by the aggregate links, wherein N is positive integer.
